# EUROPÄISCHE PATENTANMELDUNG

(11) **EP 1 652 750 A2**
(43) Veröffentlichungstag der Anmeldung: **03.05.2006**
(21) Anmeldenummer: 05021232.3
(22) Anmeldetag: 29.09.2005
(51) Int. Cl.: B62D 5/07

(54) **Lenkhilfeintegration in Zentralhydrauliksystem**

(30) Priorität: 28.10.2004 DE 102004052540
(71) Anmelder: ThyssenKrupp Presta SteerTec GmbH, 40476 Düsseldorf (DE)
(72) Erfinder: Poppe, Frank, Dipl.-Ing. (FH), 73230 Kirchheim/Teck (DE)
(74) Vertreter: LENZING GERBER

(57) **Zusammenfassung**

Die Erfindung betrifft ein Kraftfahrzeug mit einer Zentralhydraulik (Z) und einem hydraulisch unterstützenden Lenksystem (2,4), wobei das Zentralhydrauliksystem (Z) den Unterstützungsdruck für das Lenksystem (2,4) erzeugt.

## Beschreibung

Die vorliegende Erfindung betrifft ein Kraftfahrzeug mit einer Zentralhydraulik und einem hydraulisch unterstützenden Lenksystem.

Hydraulische Lenksysteme weisen stets eine eigene Pumpe zur Erzeugung des Unterstützungsdruckes auf. Dieser Unterstützungsdruck ist lenkungsabhängig und liegt idR weit unter dem Druck von ca. 200 bar, welcher vom Zentralhydrauliksystem erzeugt wird.

Aufgabe der vorliegenden Erfindung ist es, die Erzeugung des Unterstützungsdrucks für ein hydraulisch wirkendes Lenksystem kostengünstiger zu gestalten.

Diese Aufgabe wird erfindungsgemäß mit einem Lenksystem mit den Merkmalen des Anspruchs 1 gelöst. Weitere vorteilhafte Ausgestaltungen der Erfindung ergeben sich durch die Merkmale der Unteransprüche.

Die Erfindung zeichnet sich vorteilhaft dadurch aus, dass auf die normaler weise verwendete Pumpe für die hydraulische Lenkung verzichtet werden kann. Die ohnehin vorhandene Pumpe des Zentralhydrauliksystems des Fahrzeugs wird vorteilhaft zur Erzeugung des Unterstützungsdrucks der hydraulischen Lenkung genutzt. Hierzu ist es lediglich notwendig, den hohen Druck von ca. 200 bar, welcher vom Zentralhydrauliksystem erzeugt wird, auf das erforderliche Maß abzusenken. Dies kann z.B. vorteilhaft mittels eines Druckminderventils oder Stromregelventils erfolgen. Ferner kann auf den zusätzlichen Tank und die zugehörigen Zuführleitungen und Sicherheitssysteme verzichtet werden. Das erfindungsgemäße System weist daher nur noch einen gemeinsamen Tank für das Zentralhydrauliksystem und die hydraulische Lenkhilfe und evtl. für zusätzliche Verbraucher auf.

Es ist selbstverständlich notwendig, dass die Zentralhydraulik derart ausgelegt ist, dass für jeden einzelnen an die Zentralhydraulik angeschlossenen Verbraucher zu jeder Zeit eine ausreichende Versorgung gewährleistet ist.

Durch die Erfindung läßt sich vorteilhaft eine Reduzierung des Systemgewichts sowie ein Verringerung des benötigten Bauraums erzielen, da keine separate Pumpe für das Lenksystem notwendig ist.

Nachfolgend wir die Erfindung anhand einer Zeichnung näher erläutert.

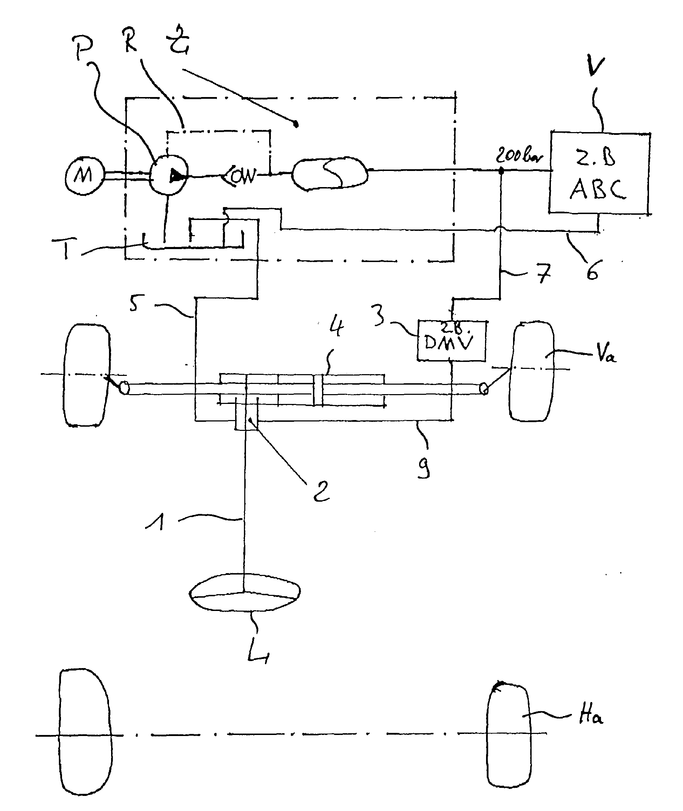

Die Zeichnung zeigt eine stark vereinfachte Darstellung eines Kraftfahrzeuges mit den für die Erfindung wesentlichen Komponenten. Das Fahrzeug verfügt über eine Lenkhandhabe L, mittels derer über ein Lenkgestänge 1 die hydraulisch unterstützte Lenkung 2 mit dem Servoaggregat 4 steuerbar ist. Das Lenksystem 2 wird über eine Zuführleitung 9 mit dem benötigten Unterstützungsdruck versorgt. Der Unterstützungsdruck wird mittels des Druckminderventils 3 aus dem von der Zentralhydraulik Z zur Verfügung gestellten Versorgungsdruck von ca. 200 bar erzeugt. Hierzu ist das Druckminderventil 3 über eine Leitung 7 mit der Zentralhydraulik Z verbunden. Über die Zentralhydraulik Z, welche eine von dem Fahrzeugmotor M angetriebene druckgeregelte Hydraulikpumpe P aufweist, können weitere Verbraucher V versorgt werden. Das Zentralhydrauliksystem verfügt zudem über einen Tank T, welcher über Rückführleitungen 5,6 das Hydraulkmedium der Verbraucher V sowie des Lenksystems 2 sammelt und wieder der Pumpe P zuführt.

## Patentansprüche

1. Kraftfahrzeug mit einer Zentralhydraulik (Z) und einem hydraulisch unterstützenden Lenksystem (2,4), **dadurch gekennzeichnet , dass** das Zentralhydrauliksystem (Z) den Unterstützungsdruck für das Lenksystem (2,4) erzeugt.

2. Kraftfahrzeug nach Anspruch 1, **dadurch gekennzeichnet, dass** das ein Druckminderer (3) den vom Zentralhydrauliksystem (Z) erzeugten Druck auf den erforderlichen Unterstützungsdruck mindert oder herunterregelt.

3. Kraftfahrzeug nach Anspruch 2, **dadurch gekennzeichnet, dass** der Druckminderer (3) ein Druckminderventil oder ein Stromregelventil ist.

4. Kraftfahrzeug nach einem der vorhergehenden Ansprüche, **dadurch gekennzeichnet , dass** die Pumpe (P) des Zentralhydrauliksystems (Z) aus einem Tank (T) mit Hydraulikmedium gespeist ist, wobei der Tank (T) als Aufnahmebehälter für das vom Lenksystem und evtl. von anderen von dem Zentralhydrauliksystem versorgten Verbrauchern zurückfließende Hydraulikmedium dient.

5. Kraftfahrzeug nach einem der vorhergehenden Ansprüche, **dadurch gekennzeichnet , dass** das Lenksystem ein System mit offener oder geschlossener Mitte ist.

6. Kraftfahrzeug nach einem der vorhergehenden Ansprüche, **dadurch gekennzeichnet , dass** die Pumpe des Zentralhydrauliksystems eine druckgeregelte Pumpe ist.
